# EUROPEAN PATENT APPLICATION

(11) **EP 1 378 832 A1**
(43) Date of publication of application: **07.01.2004**
(21) Application number: 02014789.8
(22) Date of filing: 04.07.2002
(51) Int. Cl.: G06F 11/36

(54) **Process and system for comfortable debugging of computer programs**

(71) Applicant: SAP Aktiengesellschaft, 69190 Walldorf (DE)
(72) Inventor: Jentsch, Frank, 69242 Mühlhausen (DE); Wagenführer, Ralph, 67227 Frankenthal (DE)

(57) **Abstract**

The Invention relates to a process for debugging computer program code by means of a debugging software, which provides software means for causing the debugging software to stop at a breakpoint set in said computer program code, comprising:
-- debugging a program code having at least one type of breakpoints,
-- activating or deactivating all breakpoints of the at least one type by a single action.

## Description

### Background of the Invention

### Field of the Invention.

The technical field of this invention is in the area of electronic data processing. More particularly, the invention relates to methods, computer program products and systems for debugging a program code.

### Description of the Related Art

When developing a computer program, debugging of the program code is often a difficult and time consuming work. Debugging is often performed in the following manner: finding the program part which causes problems, finding the relevant lines of the program code, setting of breakpoints a places in the program code, which are of interest regarding the status of certain variables, and executing the program code with a debugging software (debugger). When executing the debugger, the run-time environment of the program developing environment starts executing the program code, stops its execution at the first breakpoint in the order of the execution and usually displays the content of variables for analysis. A failure in the program code (bug) needs not necessarily be present. The debugger can be used to only show the content of certain variables as well.

This procedure has certain disadvantages. The performance of the first three steps mentioned above is a lot of workload if the debugging has to be frequently repeated. Program developers and coworkers, who have to maintain the program, need a good understanding of the total program code, although only part of the code might be interesting for the debugging purpose. An other point is that the breakpoints are automatically deleted when closing the program. So, when starting the debugging software anew in a new session, the breakpoints have to be set again.

Thus, there is a need for a method and/or debugging system providing a more efficient solution of the problems described above.

### Summary of the Invention

In accordance with the invention, as embodied and broadly described herein, methods and systems consistent with the principles of the invention provide for debugging computer program code by means of a debugging software, which provides software means for causing the debugging software to stop at a breakpoint set in said computer program code, comprising:
-- debugging a program code having at least one type of breakpoints,
-- activating or deactivating all breakpoints of the at least one type by a single action.

In accordance with another aspect, the invention, as embodied and broadly described herein, methods and systems consistent with the principles of the invention provide a computer system for debugging computer program code by means of a debugging software, which provides software means for causing the debugging software to stop at a breakpoint set in said computer program code comprising:
- a memory having program instructions;
- an input means for entering data;
- a storage means for storing data;
- a processor responsive to the program instructions to:
   -- debugging a program code having at least one type of breakpoints,
   -- activating or deactivating all breakpoints of the at least one type by a single action.

The invention is further directed to a computer readable medium, a computer program and a carrier signal comprising instructions for debugging program code according to the method as described above.

Additional objects and advantages of the invention will be set forth in part in the description, or may be learned by practice of the invention. The objects and advantages of the invention will be realized and attained by means of the elements and combinations particularly pointed out in the appended claims. Preferred implementations of the invention are disclosed in the detailed description section and in the dependent claims.

It is understood that both the foregoing general description and the following detailed description are exemplary and explanatory only and are not restrictive of the invention, as claimed.

### Brief Description of the Drawings

The accompanying drawings, which are incorporated in and constitute a part of this specification, illustrate implementations of the invention and, together with the description, explain the principles of the invention. In the drawings,
Fig. 1 is an exemplary computer system for implementing the features of the principles of the present invention;
Fig. 2 shows a schematic representation of an exemplary screen mask to activate or deactivate breakpoints.

### Detailed description

Reference will now be made in detail to the principles of the invention, examples of which are illustrated in the accompanying drawings. Examples, mentioned therein, are intended to explain the invention and not to limit the invention in any kind.

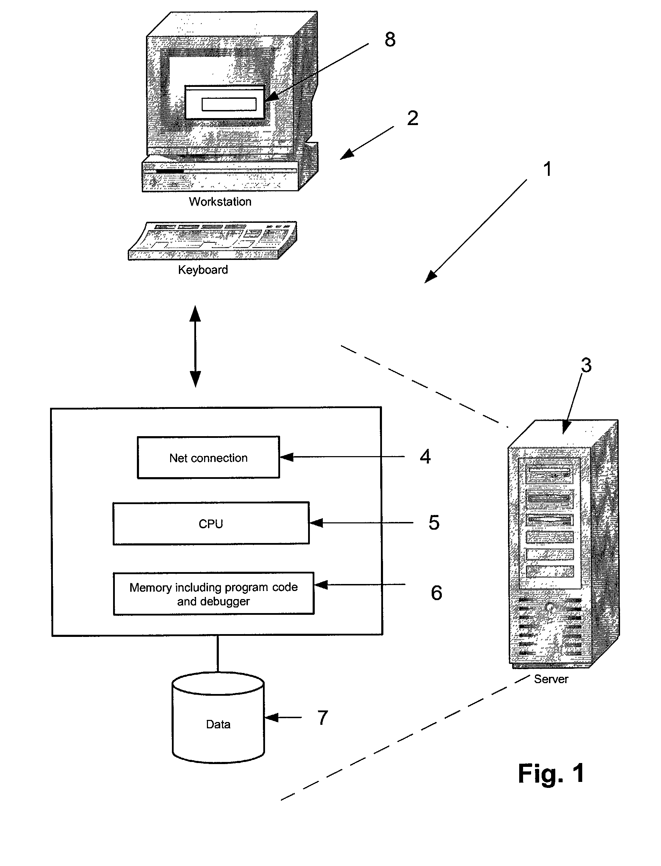

Within the scope of this invention, the terms of the invention used in this specification have the meaning that is usual in programming languages like C, C++, JAVA, ABAP, ABAP Objects. The following explanations of the invention are made with reference to the figures 1 to 2. The given examples are of explanatory nature only and are not intended to limit the scope of the invention.

Particularly, a breakpoint or a breakpoint instruction, both terms being used herein alternatively, is any software means, which causes a debugging software to stop a that point of the program code, at which the breakpoint or breakpoint instruction is set. Debugging a program code means, within the scope of this invention, to execute a program code by means of a debugging software. Whether the program code contains failures (bugs) or not is irrelevant. A breakpoint according to the invention can be implemented in a program code by a macro call. A macro thereby is a abbreviation of a program coding containing the breakpoint instruction. In the macro, the breakpoint is included in a conditional instruction having one or more conditions, which must be fulfilled, if the breakpoint instruction can be executed by the run-time environment. By this method, a type of breakpoints can be defined. Each type of breakpoints is characterised by a particular set of conditions. The implementation by a macro is not inevitably necessary. However, it reduces the programming effort considerably.

A condition (abbreviated as "cond") can be any type of logical comparison of data known to the skilled artisan. Two or more conditions can be combined by logical connections "AND", "OR" and/or "XOR" as may be appropriate in the respective case.

The conditions can be structured such, that in all macros of a given program an identical condition has to be fulfilled. In this case the identical condition works like a main switch. Further in different macros, additional to such a general condition, additional second, third, fourth or more conditions can be implemented. Structures mixed with "AND", "OR" and/or "XOR" connections are also possible.

The macros can be stored in one or more separate files, which can be included into the program code by include instructions in the definition part of the program. This procedure makes the breakpoints persistent with respect to the closing of the program.

Advantageously, different macros can be defined using different sets of conditions, thereby creatin different types of breakpoints. The different sets of one or more conditions can be stored in one or more arrays or in one or more tables in volatile and/or non volatile memory. Such an array or table can be made accessible for only one type of macro. The set or sets of conditions can be edited during the debugging procedure. This allows, by setting or deactivation software switches, that all or only certain types of breakpoints, such, which have one common condition included in the respective macros, can be activated or deactivated by a single action. This can be implemented e.g. by a screen mask, in which a software switch can be activated or deactivated by a mouse click or a key stroke. The screen mask according to this invention is a graphical user interface, by means of which reading and writing access is provided to the array, in which the one or more conditions are stored.

A further preferred implementation is a macro in which one of the conditions whether a string variable handed over by the macro is identical to a respective variable stored in the arrays or tables mentioned above. In this case, a query is started to check, whether a preset string is equal to a string given in the macro.

A preferred implementation of a type of breakpoints can be, for example, a macro, in which the at least one condition is realized by the classical "if" instruction. This is pointed out in more detail in the following example. Alternatively, "case" or "select case" or similar instructions may be used as well.

### MACRO_1:

IF cond0 = TRUE AND cond1 = TRUE THEN
BREAKPOINT
ENDIF

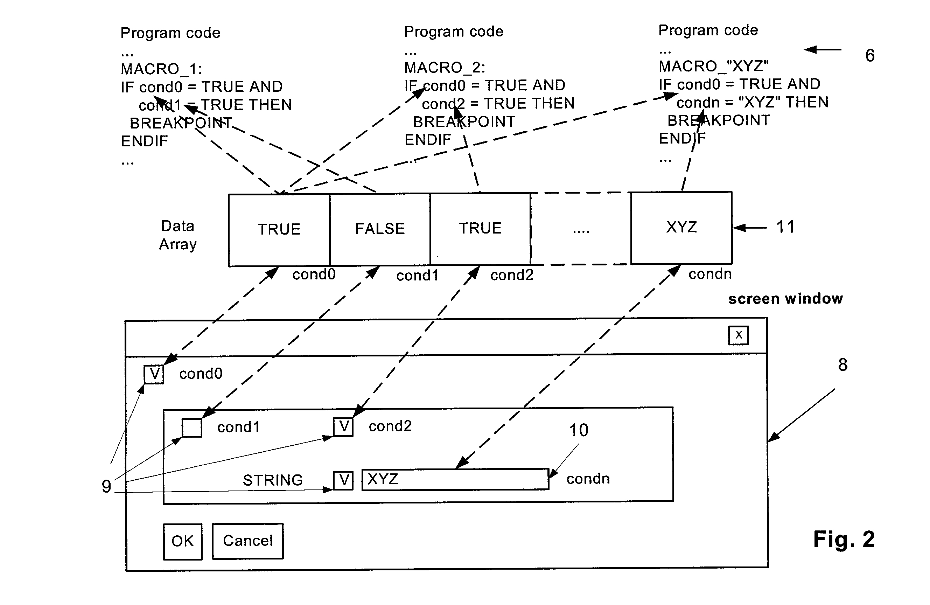

An example of the invention by using a breakpoint of the latter type and a screen mask is shown by the schematic drawings in figures 1 and 2:
Fig. 1 shows a computer system 1 for allowing a user to debug program code by means of a debugger according to the principles of the present invention. Computer system 1 comprises a server 3 with a central processing unit 5, a net connection 4 for connection with at least one input/output means 2 including screen and keyboard, at least one data storage means 7 and memory 6 including program code and debugging software. On the screen, a screen mask like a window 8 for providing read and write access to the storage means 7 is shown. In Fig. 2 the invention is described in more detail. In a program code 6 three types of macros including an if-instruction and a breakpoint instruction are inserted (breakpoint). The three types of breakpoints are named Macro_1, Macro_2 and Macro_"XYZ". In each breakpoint, a different set of conditions has to be fulfilled, if the debugger shall be caused to stop at the respective breakpoint: In Macro_1 cond0 and cond1, in Macro_2 cond0 and cond2, and in Macro_3 cond0 and condn have to be fulfilled. Whether a condition is fulfilled or not can be decided by the contents of the respective fields of a data array 11, where respective fields are allocated to respective conditions. In the example in Fig. 2, fields named cond"i" with i from 1 to n are allocated to the conditions of the same name. In the example cond 0 reads as: if the content of field cond 0 in the Data Array is TRUE (i.e. contains the boolean value TRUE), then cond 0 is fulfilled. Condn reads as: if the content of field condn of the Data Array is equal to "XYZ" (i.e. contains the string "XYZ"), then condn is fulfilled.
As indicated in Fig. 2, the fields of the data array can be accessed by read and write operations by a user via a graphical user interface like the window 8, which provides means for editing data like. A user can set a field in the data array to TRUE or FALSE (boolean variable) by clicking with a mouse on boxes 9 named according to the conditions they refer to. A "V" indicates that the content of the respective field in the data array 11 has the content TRUE. A blank indicates that the content of the respective field in the data array 11 has the content FALSE. The string for condn can be edited via a keyboard in a screen field 10. The screen window 8 can have additional usual attributes like OK button to save in storage and Cancel to escape without save. As can be deduced from Fig. 1, cond0 is a general condition, which allows to completely deactivate all macros in the program by one click. In the example of Fig. 1, the breakpoint instruction only in Macro_2 and Macro_"XYZ" will be executed, what means that the debugger will stop a the respective places, where the macros are incorporated in the program code.

The invention is of a general nature and can be used debugging software in programming languages or rather programming environments, which support a statement to define a breakpoint, such as ABAP, ABAP Objects or Visual Basic. A technical advantage of the breakpoints according to the inventive concept is that such breakpoints, when set in a program code, are persistent even if the debugging session is closed.

Computer programs based on the written description of this invention are within the skill of an experienced developer.

The invention can be implemented in digital electronic circuitry, or in computer hardware, firmware, software, or in combinations of them. The invention can be implemented as a computer program product, i.e., a computer program, in which predefined breakpoints and/or a screen mask are available, tangibly embodied in an information carrier, e.g., in a machine-readable storage device or in a propagated signal, for execution by, or to control the operation of, data processing apparatus, e.g., a programmable processor, a computer, or multiple computers. The computer program code can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps of the invention can be performed by one or more programmable processors executing a computer program to perform functions of the invention by operating on input data and generating output.

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the invention can be implemented on a computer having a display device such as a CRT (cathode ray tube) or LCD (liquid crystal display) monitor for displaying information to the user and a keyboard and a pointing device such as a mouse or a trackball by which the user can provide input to the computer. Other kinds of devices can be used to provide for interaction with a user as well; for example, feedback provided to the user can be any form of sensory feedback, such as visual feedback, auditory feedback, or haptic feedback; and input from the user can be received in any form, including acoustic, speech, or haptic input.

Modifications and adaptations of the present invention will be apparent to those skilled in the art from consideration of the specification and practice of the invention disclosed herein. The foregoing description of an implementation of the invention has been presented for purposes of illustration and description. It is not exhaustive and does not limit the invention to the precise form disclosed. Modifications and variations are possible in light of the above teachings or may be acquired from the practicing of the invention. For example, the described implementation includes software, but systems and methods consistent with the present invention may be implemented as a combination of hardware and software or in hardware alone. Additionally, although aspects of the present invention are described for being stored in memory, one skilled in the art will appreciate that these aspects can also be stored on other types of computer-readable media, such as secondary storage devices, for example, hard disks, floppy disks, or CD-ROM; the Internet or other propagation medium; or other forms of RAM or ROM. It is intended that the specification and examples be considered as exemplary only, with a true scope and spirit of the invention being indicated by the following claims.

## Claims

1. A method for debugging computer program code by means of a debugging software, which provides software means for causing the debugging software to stop at a breakpoint set in said computer program code, comprising:
-- debugging a program code having at least one type of breakpoints,
-- activating or deactivating all breakpoints of the at least one type by a single action.

2. The method of claim 1, wherein:
-- the stop of the debugging software at an at least one type of breakpoint is made dependent on a certain set of predefinable conditions.

3. The method of claim 2, wherein
-- the one or more predefinable conditions are stored in a data array.

4. The method of claim 2 or 3, wherein
-- the one or more predefinable conditions are identical for a predefinable type of breakpoint.

5. The method of one of claims 2 to 4, wherein
-- the one or more predefinable conditions are stored in a data array, which is accessible for only one type of breakpoints.

6. The method of one of claims 2 to 5, wherein
-- the one or more predefinable conditions are changeable during the debugging process.

7. The method one of claims 2 to 6,wherein
-- the one or more predefinable conditions are stored in a non volatile storage.

8. The method of one of claims 1 to 7, wherein
-- a breakpoint is set by setting a macro call, comprising said breakpoint.

9. The method as claimed in any of claims 3 to 8, wherein
-- the data array is editable by means of a screen mask.

10. The method as claimed in any of claims 3 to 9, wherein
-- the data array is a table.

11. The method as claimed in any of claims 3 to 10, wherein
- the data array is accessible for read and write operations via a graphical user interface.

12. A computer system for debugging computer program code by means of a debugging software, which provides software means for causing the debugging software to stop at a breakpoint set in said computer program code comprising:
- a memory having program instructions;
- an input means for entering data;
- a storage means for storing data;
- a processor responsive to the program instructions to:
-- debugging a program code having at least one type of breakpoints,
-- activating or deactivating all breakpoints of the at least one type by a single action.

13. The computer system of claim 12, wherein
-- the stop of the debugging software at an at least one type of breakpoint is made dependent on a certain set of predefinable conditions.

14. The computer system of claim 13, wherein
-- the one or more predefinable conditions are stored in a data array.

15. The computer system as claimed in any of claims 13 to 14, wherein
-- the one or more predefinable conditions are identical for a predefinable type of breakpoint.

16. The computer system as claimed in claims 14 or 15, wherein
-- the one or more predefinable conditions are stored in a data array, which is accessible for only one type of breakpoints.

17. The computer system as claimed in any of claims 14 to 16, wherein
-- the one or more predefinable conditions are changeable during the debugging process.

18. The computer system as claimed in claim 14 to 17, wherein
-- the one or more predefinable conditions are stored in a non volatile storage.

19. The computer system as claimed in any of claims 12 to 19, wherein
-- a breakpoint is set by setting a macro call, comprising said breakpoint.

20. The computer system as claimed in any of claims 12 to 20
-- the data array is editable by means of a screen mask.

21. The computer system as claimed in any of claims 14 to 20, wherein
-- the data array is a table.

22. The computer system as claimed in any of claims 14 to 21, wherein
- the data array is accessible for read and write operations via a graphical user interface.

23. A computer readable medium comprising instructions for debugging computer program code by means of a debugging software, which provides software means for causing the debugging software to stop at a breakpoint set in said computer program code, comprising instructions for allowing a user to perform the method of any of claims 1 to 11, if said instructions are executed on a computer.

24. A computer program comprising program instructions for allowing a user to perform the method of any of claims 1 to 11, if said computer program is executed on a computer.

25. A computer data signal embodied in a carrier wave comprising:
computer executable instructions which cause a computer to provide means for allowing a user to perform the method of any of claims 1 to 11.
